Europäisches Patentamt

European Patent Office

Office européen des brevets

(11) Publication number: **0 137 658**
**A2**

# (12) EUROPEAN PATENT APPLICATION

(21) Application number: **84305613.6**

(22) Date of filing: **17.08.84**

(51) Int. Cl.⁴: **B 41 J 29/38**

(30) Priority: **27.09.83 US 536552**

(43) Date of publication of application:
**17.04.85 Bulletin 85/16**

(84) Designated Contracting States:
**AT BE CH DE FR GB IT LI LU NL SE**

(71) Applicant: **MECHATRON SYSTEMS, INC.**
**3350 Scott Boulevard Suite 48**
**Santa Clara California 95051(US)**

(72) Inventor: **Van, Tri S.**
**5007 Anaheim Loop**
**Union City California 94587(US)**

(74) Representative: **Milhench, Howard Leslie et al,**
**R.G.C. Jenkins & Co. 12-15, Fetter Lane**
**London EC4A 1PL(GB)**

(54) Method and apparatus for controllably supplying prioritized electrical excitation signals.

(57) A circuit is disclosed for controllably supplying a plurality of electrical excitation signals. The circuit includes interruptible electrical excitation signal supplying circuitry for supplying the plurality of electrical excitation signals. At least one of the plurality of electrical excitation signals is selected as having priority over the remainder of the plurality of electrical excitation signals, the at least one selected electrical excitation signal being designated a priority excitation signal. The interruptible electrical excitation signal supplying circuitry is responsive to a priority interrupt signal for supplying the priority excitation signal upon detection of the priority interrupt signal irrespective of the electrical excitation signal that the interruptible electrical excitation signal supplying circuitry is supplying other than the priority excitation signal, the interruptible electrical excitation signal supplying circuitry not being responsive to interrupt signals for supplying other than the priority excitation signal while the priority excitation signal is supplied.

FIG._1.

EP 0 137 658 A2

9949-8/TTTTT2

## METHOD AND APPARATUS FOR CONTROLLABLY
## SUPPLYING PRIORITIZED ELECTRICAL EXCITATION SIGNALS

### BACKGROUND OF THE INVENTION

This invention relates to electrical excitation circuits and, more particularly, to circuits responsive to incoming electrical control signals for producing outgoing electrical excitation signals in an automatic positioning system responsive to a command signal for controllably moving positionable elements to one of various positions with negative feedback for maintaining the position until another command signal is provided. Specifically, the invention is directed to a method and apparatus for controllably supplying electrical excitation signals in such a way that priority is accorded to the supply of one electrical excitation signal over another for maintaining a high degree of control over the movement of a selected positionable element, especially in equipment characterized by a high frequency of position changes, such as printers, for example, daisy wheel printers, disc drives, and other equipment used in information processing.

In order to facilitate an understanding of the invention, the invention will be described by way of example in connection with printers, namely, daisy wheel printers. The exemplary use of the invention in connection with a daisy wheel printer, however, is by way of illustration only and is not to be construed as a limitation of the principles of the invention to daisy wheel printers or to printers generally. As will become clear, the principles which underlie the invention apply generally to control circuits responsive to incoming electrical control signals for supplying outgoing electrical excitation signals where a higher degree of control is needed for supplying at least one of the excitation signals vis-a-vis the remainder.

In a daisy wheel printer, a petal shaped print wheel is rotatably mounted to a carriage. The carriage is reciprocally mounted with respect to a paper feeder so that the reciprocal movement of the carriage is orthogonal with respect to the direction of paper feed, for example, the paper is fed vertically and the carriage is moved horizontally. Rotation of the print wheel, reciprocation of the carriage, and movement of the paper and ribbon by means of the paper and ribbon feeders, preconditions the daisy wheel printer for enabling a character to be printed. Printing requires that the paper be indexed to a line position, the carriage be moved to a character position, and the print wheel be rotated to a selected character, as well as a print ribbon be advanced, whereupon a hammer means is energized for striking the wheel causing the wheel to be impacted on the ribbon interposed between the wheel and the paper, thereby imprinting a character on the paper.

The paper feeder, carriage, print wheel, and ribbon feeder are actuated by respective servomechanisms. The servomechanisms are under the control of a host which selects the line position, character position, and character, as well as advances the ribbon, by providing a command signal to the respective servomechanisms for the paper feeder, carriage, print wheel, as well as the ribbon feeder. It is desirable that the paper be moved to the line position, the carriage be moved to the character position, the print wheel be rotated to the selected character, as well as the ribbon be advanced, and that the hammer means then be energized.

Preferably, the command signal from the host is provided to a central servo control circuit for controlling the various servomechanisms. This provides a high degree of synchronization among the servomechanisms. However, in such a servo control circuit where the circuit serves multiple functions, namely, supplying different electrical excitation signals to the servomechanisms, a significant burden can be placed on the servo control circuit for supplying the various electrical excitation signals. If the burden on the servo control circuit in processing the command signal is significant, the servo control circuit is taxed to the extent that there is a reduction in the degree of control of the servo control circuit over the electrical excitation signals supplied. Consequently, a problem develops that the servo control circuit is unable to provide appropriate electrical excitation signals.

In the case of servomechanisms, such as daisy wheel printers, acceptable tolerances are present for the movement and positioning for certain elements, such as the paper feeder, carriage, and print wheel, as well as the ribbon feeder, but other elements such as the hammer means must be maintained under a high degree of control, that is, the function of the hammer means is critical. Otherwise, print quality is impaired. Furthermore, and perhaps an even more onerous problem is that imprecise control over the hammer means can result in damage to or breakage of the print wheel. For example, if the print wheel is rotated before the hammer means is withdrawn after impact of the hammer means against the petal shaped cantilevered character imprinting element, a character imprinting element can rotate into contact with the hammer means, which can damage or break the element, thereby necessitating replacement of the print wheel.

In view of the criticality which attaches to properly energizing the hammer means in order to assure print quality and avoid printer downtime, the servo control circuit must maintain a high degree of control over energization of the hammer means notwithstanding controlling the other elements, namely, the paper feeder, carriage, print wheel, as well as the ribbon feeder. In the past, such control over the electrical excitation signal provided to the servomechanism for the hammer means has not been satisfactorily achieved.

It is desirable to prioritize the functions so that to the extent possible a high degree of control is maintained by the servo control circuit over the function or functions as to which a high degree of control is critical. The invention provides for a high degree of control over one of a plurality of electrical excitation signals supplied by a servo control circuit, for example, the excitation signal supplied to a hammer means in a daisy wheel printer. The method and apparatus in accordance with the invention can effectively optimize control over the hammer means for assuring print quality and avoiding damage to or breakage of the print wheel.

## SUMMARY OF THE INVENTION

In accordance with the method aspect of the invention, a method is provided for controllably supplying a plurality of electrical excitation signals, comprising the steps of: providing interruptible electrical excitation signal supplying means for supplying the plurality of electrical excitation signals; selecting at least one of the plurality of electrical excitation signals as having priority over the remainder of the plurality of electrical excitation signals, the at least one selected electrical excitation signal being designated a priority excitation signal; configuring the interruptible electrical excitation signal supplying means to respond to a priority interrupt signal for supplying the priority excitation signal upon detection of the priority interrupt signal irrespective of the electrical excitation signal the interruptible electrical excitation signal supplying means is supplying other than the priority excitation signal, the interruptible electrical excitation signal supplying means being configured not to respond to interrupt signals for supplying other than the priority excitation signal while the priority excitation signal is supplied; and supplying the priority excitation signal in response to the priority interrupt signal and the remainder of the plurality of electrical excitation signals in response to the interrupt signals, respectively.

In accordance with the apparatus aspect of the invention, one embodiment of apparatus for controllably supplying a plurality of electrical signals comprises: interruptible electrical excitation signal supplying means for supplying the plurality of electrical excitation signals; and means for selecting at least one of the plurality of electrical excitation signals as having priority over the remainder of the plurality of electrical excitation signals, the at least one selected electrical excitation signal being designated a priority excitation signal; the interruptible electrical excitation signal supplying means being responsive to a priority interrupt signal for supplying the priority excitation signal upon detection of the priority interrupt signal irrespective of the electrical excitation signal the interruptible electrical excitation signal supplying means is supplying other than the priority excitation signal, the interruptible electrical excitation signal supplying means not being responsive to interrupt signals for supplying other than the priority excitation signal while the priority excitation signal is supplied.

## BRIEF DESCRIPTION OF THE DRAWINGS

The above and other features of the invention and the concomitant advantages will be better understood and appreciated by those skilled in the art in view of the description of the preferred embodiments given below in conjunction with the accompanying drawings. In the drawings:

Figure 1 is a block diagram of an embodiment of a circuit in accordance with the invention for prioritizing the electrical excitation signals supplied to a plurality of servomechanisms within an automatic positioning system;

Figure 2 is a schematic circuit drawing for a preferred implementation of the circuit shown in Figure 1; and

Figure 3 illustrates the preferred format for a command signal fed to the circuit shown in Figure 2.

DESCRIPTION OF THE PREFERRED EMBODIMENTS

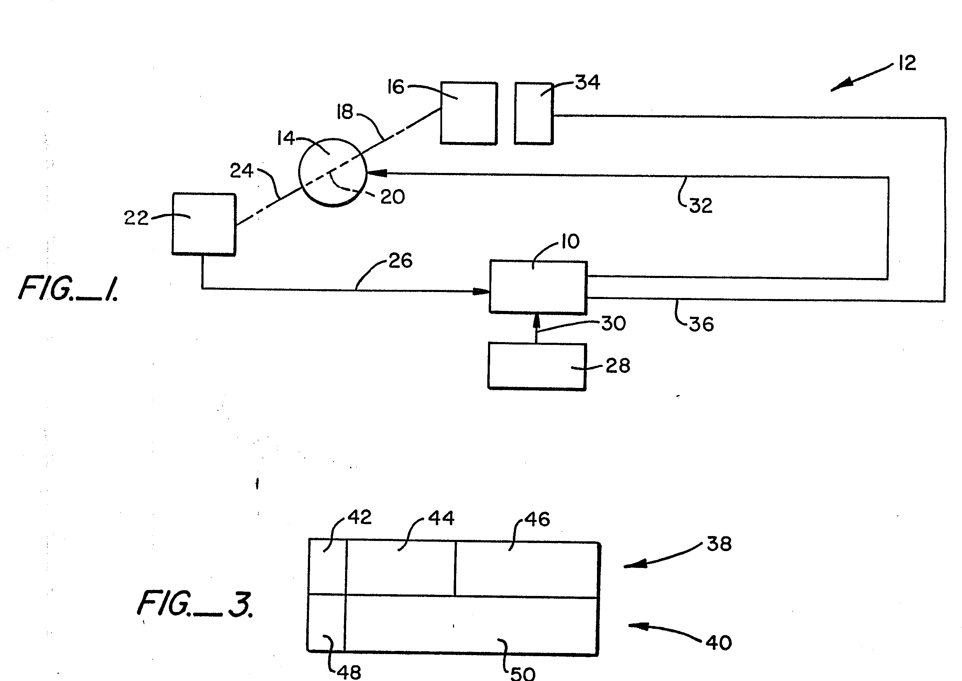

In accordance with the invention, a method and apparatus are provided for prioritizing the electrical excitation signals applied to a plurality of positionable and actuable elements, such as the paper feeder, carriage, print wheel, ribbon feeder, and hammer means included in a daisy wheel printer. By way of example, an embodiment of the electrical excitation signal prioritizing circuit in accordance with the invention, generally indicated by the numeral 10 in Figure 1, is incorporated into a servo control circuit 12 which provides a plurality of electrical excitation signals in the form of drive signals, for example, a drive signal to a servomotor 14 which moves a positionable element 16 such as a print wheel of a daisy wheel printer via a mechanical link 18 connected to the drive shaft 20 of the servomotor.

The actual speed or position of the positionable element 16 can be detected by any-known technique. Preferably, as shown in Figure 1, a shaft encoder 22 is connected via a mechanical link 24 to the drive shaft 20 of the servomotor 14. The shaft encoder 22 encodes the angular position of the drive shaft 20, which is correlated to the actual position of the positionable element 16. Movement of the positionable element 16 is evidenced by variations in the output signal produced by the shaft encoder 22. The output of the shaft encoder 22 is connected by leads 26 to the input of the electrical excitation signal prioritizing circuit 10.

The output signal from the shaft encoder 22 on the leads 26 forms a feedback signal for closed loop control of the position of the positionable element 16 in the form of the print wheel. The electrical excitation signal prioritizing circuit 10 is responsive to a command signal in the form of digital information from a host 28 over a bus 30 and to the position feedback signal on the leads 26 for supplying a drive signal on the leads 32 to the servomotor 14 for moving the positionable element 16 in the form of the print wheel. The electrical excitation signal prioritizing circuit 10 can also supply additional electrical excitation signals to other positionable or actuable elements (not shown), such as a paper feeder, carriage, and ribbon feeder, in response to a command signal from the host 28.

Furthermore, as shown in Figure 1, the electrical excitation signal prioritizing circuit 10 supplies a priority electrical excitation signal to an actuable element 34, such as a hammer means for impacting the print wheel, over the leads 36 in response to a command signal from the host 28. In accordance with the invention, the priority electrical excitation signal provided by the electrical excitation signal prioritizing circuit 10 over the leads 36 to the actuable element 34 is not interruptible while the priority electrical excitation signal is being provided such as by interruptions which can arise in response to the appearance of a control signal from the shaft encoder 22 on the leads 26 or an incoming command signal on the bus 30.

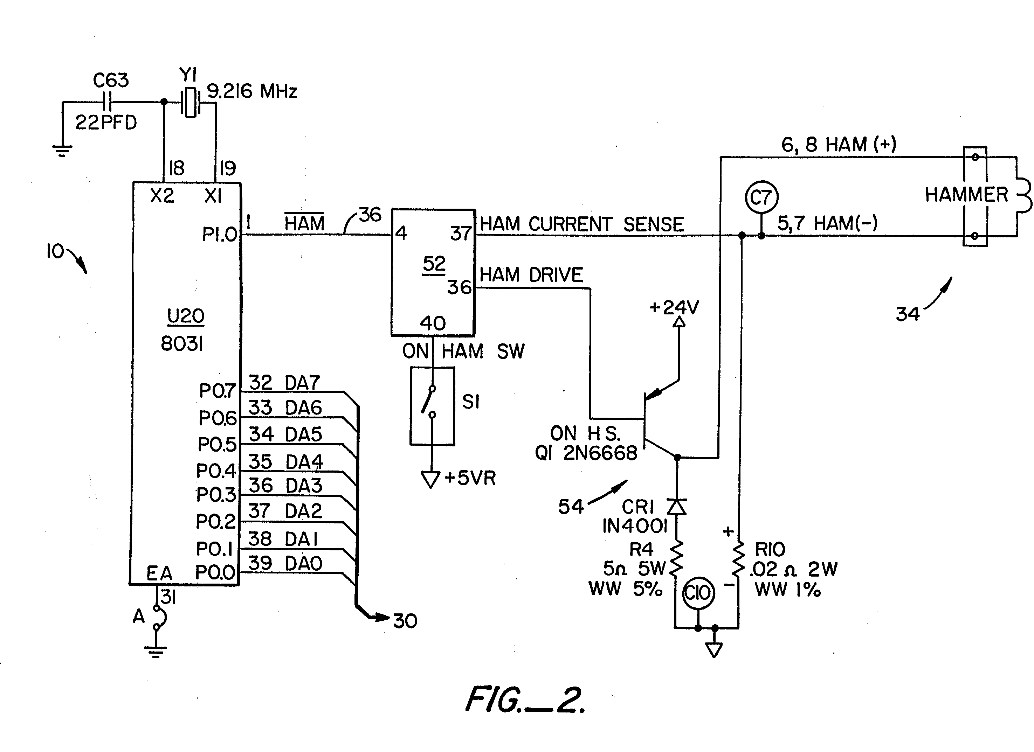

As shown in Figure 2, the command signal in the form of digital information from the host 28 appears on the bus 30. The electrical excitation signal prioritizing circuit 10 preferably includes a type 8031 microprocessor circuit available from Intel Corporation of Santa Clara, California.

The format for each character to be printed is shown in Figure 3. The command signal in the form of digital information from the host 28 comprises two eight-bit bytes 38 and 40, respectively. The first byte 38 includes a most significant bit 42 which is not used. The next three bits of the first byte 38 comprise a hammer intensity code 44 which will be described in more detail shortly. The final four bits of the first byte 38 comprise a ribbon feed code 46 for controlling the advance of the print ribbon. The second byte 40 includes a most significant bit 48 which is not used. The remaining seven bits of the second byte 40 comprise a character identification code 50.

The character identified by the character identification code 50 included in the second byte 40 is preferably assigned a hammer intensity code 44 dependent upon the size of the character. There can be, for example, four different hammer intensity codes 44 assigned to the various characters to be printed. The provision of a number of different hammer intensity codes 44 assures uniformity in the printing of the various characters, both as to impression and shade.

The electrical excitation signal prioritizing circuit 10 accesses a look-up table in a read only memory included in the signal prioritizing circuit based on the hammer intensity code 44 included in the first byte 38. The information read from the look-up table determines the duration and thus the intensity of the electrical excitation signal provided by the electrical excitation signal prioritizing circuit 10 to the actuable element 34 in the form of the hammer means.

By way of example, an "M" character can have a hammer intensity code 44 encoded "100" which accesses a value from the look-up table so that the electrical excitation signal prioritizing circuit 10 produces an electrical excitation signal for 2.6 milliseconds. Similarly, a "B" character has a hammer intensity code 44 encoded "011" which accesses a value so that the electrical excitation signal prioritizing circuit 10 provides an electrical excitation signal for 2.45 milliseconds. Additionally, an "a" character is encoded "010" by means of the hammer intensity code 44 which accesses the value 2.3 milliseconds from the look-up table during which the electrical excitation signal prioritizing circuit 10 provides an electrical excitation signal. Also, a period (.) has a hammer intensity code 44 encoded "001" which accesses a value so that the electrical excitation signal prioritizing circuit 10 provides an electrical excitation signal for 2.2 milliseconds. It is noted that the duration differences are small (i.e., 100 to 150 microseconds) in order to achieve the desired impression and shade for the various characters. Consequently, in accordance with the invention, priority is given to energization of the actuable element 34 in the form of the hammer means for assuring a high degree of control over the hammer means in order to obtain uniform quality printing (i.e., uniformity of impression and shade of the printed characters), as well as to avoid damage to or breakage of the print wheel.

The 8031 microprocessor circuit accords two levels of priority, namely, a low priority and a high priority. If a low priority assignment is selected, the low priority interrupt cannot override either another low priority or a high priority assignment. In contrast, if a high priority assignment is selected, the high priority interrupt can override a low priority assignment. No more than one high priority assignment can be made as to interrupts which can occur during a given time frame. In accordance with the invention, high priority is assigned to supplying a priority electrical excitation signal to the actuable element 34 in the form of the hammer means, that is, the hammer means interrupt is given a high priority assignment. Consequently, the required pulse width, for example, 2.2, 2.3, 2.45, or 2.6 milliseconds is assured without causing interruption of the hammer means energization signal, thereby avoiding jitter of the hammer means.

The 8031 microprocessor circuit provides the priority electrical excitation signal for the actuable element 34 in the form of the hammer means on the lead 36 shown in Figure 2. The remaining electrical excitation signals, such as for the paper feeder, carriage, and print wheel, as well as the ribbon feeder, appear on the bus 30.

Preferably, the priority electrical excitation signal provided by the 8031 microprocessor circuit is input to a drive signal circuit 52. The drive signal circuit 52 adjusts the power characteristics of the priority electrical excitation signal from the 8031 microprocessor circuit.

As also shown in Figure 2, the output of the drive signal circuit 52 is preferably connected through a power amplifier 54 to the actuable element 34 in the form of the hammer means. The intensity of the priority electrical excitation signal provided to the actuable element 34 in the form of the hammer means is a function of the pulse width of the priority electrical excitation signal from the 8031 microprocessor circuit (i.e., the longer the duration of the pulse, the higher the drive signal power supplied to the hammer means).

In operation, the service routine for the energization of the actuable element 34 in the form of the hammer means has maximum priority on an interrupt, that is, high priority (i.e., priority 1). Other interrupts have low priority (i.e., priority 0). Examples of other interrupts are an interrupt generated by the signal from the shaft encoder 22 which provides a closed loop feedback signal for positioning the positionable element 16 such as the print wheel. Additional interrupts, for example, can include a real time clock interrupt. The paper feeder, carriage, and print wheel, as well as the ribbon feeder, are first positioned in readiness for printing a character in response to a command signal from the host 28. Thereafter, the 8031 microprocessor circuit commences execution of a hammer service routine which reads the hammer intensity code 44 shown in Figure 3, accesses the look-up table stored in the read only memory included in the 8031 microprocessor, and loads the time obtained from the look-up table into a hammer timing means. The hammer service routine then counts down the hammer timing means during the firing period for the hammer means. Since the hammer service is accorded priority over the other interrupts, any conflicts are resolved in favor of counting down the hammer timing means so that current is passed through the hammer solenoid for the precise period of time specified for the given character. This assures that a high degree of control is maintained over the energization of the actuable element 34 in the form of the hammer means.

Prioritizing the electrical excitation signal supplied to the hammer means by the electrical excitation signal prioritizing circuit in accordance with the invention avoids jitter of the hammer means and, consequently, improves the uniformity of the print. Furthermore, precluding interruption of the electrical excitation signal supplied to the hammer means avoids damage to or breakage of the print wheel by assuring that movement of the hammer means is completed during a time frame different from movement of the print wheel.

While an embodiment for an electrical excitation signal prioritizing circuit has been described in order to make the invention understandable to those skilled in the art, it will be appreciated that modifications not mentioned will become apparent to those skilled in the art. It is to be clearly understood that the above description is by way of example and illustration only and is not to be taken by way of limitation. Accordingly, the spirit and scope of this invention are ascertainable only by reference to the appended claims.

CLAIMS:

1. A method for controllably supplying a plurality of electrical excitation signals, comprising the steps of:

providing interruptible electrical excitation signal supplying means for supplying the plurality of electrical excitation signals;

selecting at least one of the plurality of electrical excitation signals as having priority over the remainder of the plurality of electrical excitation signals, the at least one selected electrical excitation signal being designated a priority excitation signal;

configuring the interruptible electrical excitation signal supplying means to respond to a priority interrupt signal for supplying the priority excitation signal upon detection of the priority interrupt signal irrespective of the electrical excitation signal the interruptible electrical excitation signal supplying means is supplying other than the priority excitation signal, the interruptible electrical excitation signal supplying means being configured not to respond to interrupt signals for supplying other than the priority excitation signal while the priority excitation signal is supplied; and

supplying the priority excitation signal in response to the priority interrupt signal and the remainder of the plurality of electrical excitation signals in response to the interrupt signals, respectively.

2. The method of Claim 1, further comprising the step of providing the priority interrupt signal.

3. The method of Claim 1, further comprising the step of providing the interrupt signals.

4. The method of Claim 1 wherein the priority excitation signal has one of a plurality of durations, and wherein the step of supplying the priority excitation signal comprises supplying a selected one of the plurality of durations for the electrical excitation signal.

5. A method for controllably supplying a plurality of electrical excitation signals to a plurality of servomechanisms included in an automatic positioning system, comprising the steps of:

providing interruptible electrical excitation signal supplying means for supplying the plurality of electrical excitation signals to the plurality of servomechanisms;

selecting at least one of the plurality of electrical excitation signals supplied to at least one of the servomechanisms as having priority over the remainder of the plurality of electrical excitation signals supplied to the remainder of the servomechanisms, the at least one selected electrical excitation signal being designated a priority excitation signal;

configuring the interruptible electrical excitation signal supplying means to respond to a priority interrupt signal for supplying the priority excitation signal upon detection of the priority interrupt signal irrespective of the electrical excitation signal the interruptible electrical excitation signal supplying means is supplying other than the priority excitation signal, the interruptible electrical excitation signal supplying means being configured not to respond to interrupt signals for supplying other than the priority excitation signal while the priority excitation signal is supplied; and

supplying the priority excitation signal in response to the priority interrupt signal and the remainder of the plurality of electrical excitation signals in response to the interrupt signals, respectively.

6.    The method of Claim 5, further comprising the step of providing the priority interrupt signal.

7.    The method of Claim 5, further comprising the step of providing the interrupt signals.

8.    The method of Claim 5 wherein the priority excitation signal has one of a plurality of durations, and wherein the step of supplying the priority excitation signal comprises supplying a selected one of the plurality of durations for the electrical excitation signal.

9.    Apparatus for controllably supplying a plurality of electrical excitation signals, comprising:
          interruptible electrical excitation signal supplying means for supplying the plurality of electrical excitation signals; and
          means for selecting at least one of the plurality of electrical excitation signals as having priority over the remainder of the plurality of electrical excitation signals, the at least one selected electrical excitation signal being designated a priority excitation signal;
          the interruptible electrical excitation signal supplying means being responsive to a priority interrupt signal for supplying the priority excitation signal upon detection of the priority interrupt signal irrespective of the electrical excitation signal the interruptible electrical excitation signal supplying means is supplying other than the priority excitation signal, the interruptible electrical excitation signal supplying means not being responsive to interrupt signals for supplying other than the priority excitation signal while the priority excitation signal is supplied.

10.    The apparatus of Claim 9, further comprising means for providing the priority interrupt signal.

11.     The apparatus of Claim 9, further comprising means for providing the interrupt signals.

12.     The apparatus of Claim 9 wherein the priority excitation signal has one of a plurality of durations and wherein the means for supplying the priority excitation signal comprises means for supplying a selected one of the plurality of durations for the electrical excitation signal.

13.     Apparatus for controllably supplying a plurality of electrical excitation signals to a plurality of servomechanisms included in an automatic positioning system, comprising:
interruptible electrical excitation signal supplying means for supplying the plurality of electrical excitation signals to the plurality of servomechanisms; and
means for selecting at least one of the plurality of electrical excitation signals supplied to at least one of the servomechanisms as having priority over the remainder of the plurality of electrical excitation signals supplied to the remainder of the servomechanisms, the at least one selected electrical excitation signal being designated a priority excitation signal;
the interruptible electrical excitation signal supplying means being responsive to a priority interrupt signal for supplying the priority excitation signal upon detection of the priority interrupt signal irrespective of the electrical excitation signal the interruptible electrical excitation signal supplying means is supplying other than the priority excitation signal, the interruptible electrical excitation signal supplying means not being responsive to interrupt signals for supplying other than the priority excitation signal while the priority excitation signal is supplied.

14. The apparatus of Claim 13, further comprising means for providing the priority interrupt signal.

15. The apparatus of Claim 13, further comprising means for providing the interrupt signals.

16. The apparatus of Claim 13 wherein the priority excitation signal has one of a plurality of durations and wherein the means for supplying the priority excitation signal comprises supplying a selected one of the plurality of durations for the electrical excitation signal.

17. A control system or method wherein means are responsive to each of a plurality of different inputs for developing a corresponding control signal for determining the operation of a respective one of a plurality of devices operating under control of the control system, and wherein at least one of said inputs is designated a priority input in response to the occurrence whereof a corresponding control signal is developed irrespective of the development of any other control signals by the control means at the time of said occurrence, and no control signal is generated in response to a non-priority input occurring while said priority input is maintained.

FIG.__1.

FIG.__3.

FIG.\_2.

0137658